# EUROPÄISCHE PATENTSCHRIFT

(11) **EP 0 520 147 B1**
(45) Veröffentlichungstag und Bekanntmachung des Hinweises auf die Patenterteilung: **19.07.1995**
(21) Anmeldenummer: 92105742.8
(22) Anmeldetag: 03.04.1992
(51) Int. Cl.: B60G 17/056

(54) **Steueranlage zum willkürlichen Heben und Senken des Fahrzeugaufbaus von luftgefedertern Fahrzeugen**
Control system for lifting or lowering the body of vehicles with pneumatic suspension
Dispositif de commande volontaire de montée ou de descente de la carrosserie de véhicules à suspension pneumatique

(30) Priorität: 24.06.1991 DE 4120825; 31.01.1992 DE 4202729
(43) Veröffentlichungstag der Anmeldung: 30.12.1992
(73) Patentinhaber: GRAU GMBH, D-69123 Heidelberg (DE)
(72) Erfinder: Sulzyc, J., W-6904 Eppelheim (DE)
(74) Vertreter: Rehberg, Elmar, Dipl.-Ing.

(56) Entgegenhaltungen:
- WO-A-91/06440
- WO-A-91/07291
- WO-A-92/12021
- DE-A- 2 510 954
- DE-C- 3 344 022
- US-A- 3 920 283
- US-A- 4 558 886
- US-A- 4 865 349

## Beschreibung

Die Erfindung bezieht sich auf eine Steueranlage zum willkürlichen Heben und Senken des Fahrzeugaufbaus von luftgefederten Fahrzeugen mit Niveauregelung, mit den im Oberbegriff des Anspruchs 1 angegebenen Merkmalen. Die Anlage kann sowohl dann eingesetzt werden, wenn der Fahrzeugaufbau eines normal luftgefederten Fahrzeugs angehoben oder abgesenkt werden soll als auch dann, wenn eine Wechselbeladung, ein Containerbetrieb o. dgl. stattfindet.

Eine Steueranlage der eingangs beschriebenen Art ist aus der DE-A-25 10 954 bekannt. Hier ist ein Schaltventil in der Anlage vorgesehen, welches ein manuell betätigbares Bedienungselement für die Stellungen Heben und Senken aufweist. Das Schaltventil ist an einen Druckluftvorratsbehälter angeschlossen und wird von dort mit Druckluft versorgt, so daS über das Bedienungselement der Fahrzeugaufbau willkürlich gehoben bzw. abgesenkt werden kann. Weiterhin ist eine Schaltwelle vorgesehen, der ein Betätigungskolben zugeordnet ist, der über ein Steuerventil, welches im Fahrerhaus angeordnet ist, beaufschlagbar ist, so daß bei Druckluftbeaufschlagung die Stellung Fahrt einstellbar ist. Wird die Druckluftbeaufschlagung von dem Steuerkolben genommen, dann sorgen Rückführfedern dafür, daß die Stellung Stop eingenommen wird. Auch das manuell betätigbare Bedienungselement für die Stellungen Heben und Senken ist über eine Rückführfederanordnung in eine neutrale Mittelstellung zurückführbar. An das Schaltventil ist ein Niveauregelventil angeschlossen, während andererseits ein Luftfederbalg über eine entsprechende Leitung mit Druckluft versorgt wird. Diese Steueranlage setzt die ordnungsgemäße und zuverlässige Betätigung des im Fahrerhaus angeordneten Steuerventils durch den Fahrer voraus. Wird nach einem Containerbetrieb die Umsteuerung des Steuerventils vergessen, so kann das Niveauregelventil seine regelnde Funktion während der Fahrt nicht erfüllen. Das in der Anlage vorgesehene Steuerventil weist infolge der Rückführfeder den Nachteil auf, daß bei einem Ausfall von Steuerluft während der Fahrt die Stellung Fahrt verlassen und die Stellung Stop eingenommen wird, so daß die Nachregelung des Drucks in den Luftfederbälgen während der Fahrt unterbleibt. Infolge der Rückführfederanordnung des manuell betätigbaren Bedienungselementes in die Zwischenstellung ist es möglich, daß Fahrzeug auch mit abgesenktem Fahrgestell zu fahren, beispielsweise zu Rangierzwecken bei Wechselbeladung, wenn ein auf Stützen abgestellter Container oder Fahrzeugaufbau unterfahren werden soll. Die Betriebssicherheit ist von der Aufmerksamkeit der Bedienungsperson abhängig und es besteht die Gefahr, daß das Schaltventil bei einer Fahrt des Fahrzeuges im Anschluß an eine Wechselbeladung, einen Containerbetrieb o. dgl. nicht in die Stellung Fahrt verstellt wird, sondern in der Stellung Stop verbleibt.

Aus der DE-33 44 022 C2 ist eine Anlage zum Heben und Senken des Fahrzeugaufbaus von luftgefederten Fahrzeugen bekannt. Es wird dabei ein über eine Bedienungseinheit elektrisch angesteuertes Schaltventil verwendet, welches für die vier Stellungen Heben, Senken, Fahrt und Stop zwei Magnetventile besitzt, die Druckluft auf entsprechende Steuerkolben schicken, um die jeweilige Stellung des Schaltventils herbeiführen zu können. Die Bedienungseinheit weist einen Schalter auf, an welchem die jeweils gewünschte Stellung manuell eingestellt werden muß. Es können auch mehrere Bedienungseinheiten vorgesehen sein, um z. B. bei Beladung des Fahrzeugs an einer Rampe der sich ändernden Beladung jeweils zu folgen. Ist die Beladung oder der Containerbetrieb abgeschlossen und soll das Fahrzeug gefahren werden, dann ist es erforderlich, an der Bedienungseinheit die Stellung Fahrt einzustellen, damit die Luftfederbälge über das jeweilige Niveauregelventil ordnungsgemäß beschickt werden können, um die vorgesehene Höhe des Fahrzeugaufbaus einzuhalten. Wird das Vorwählen bzw. Einschalten der Stellung Fahrt dagegen vergessen, so verbleibt das Schaltventil z. B. in der Stellung Stop und die Niveauregelventile können ihre Funktion während der Fahrt nicht erfüllen. Wenn dann noch Undichtigkeiten in der Anlage vorhanden sind, sinkt der Fahrzeugaufbau während der Fahrt weiter ab, was zu gefährlichen Fahrsituationen führen kann.

Der Erfindung liegt die Aufgabe zugrunde, eine Steueranlage der eingangs beschriebenen Art bereitzustellen, mit der es möglich ist, das Schaltventil zu Beginn einer Fahrt automatisch in die Stellung Fahrt zu überführen bzw. sicherzustellen, daß es während der Fahrt die Stellung Fahrt einnimmt. Dabei soll auch ein Rangierbetrieb auch mit abgesenktem Fahrgestell möglich sein.

Erfindungsgemäß wird dies bei der Steueranlage der eingangs beschriebenen Art dadurch erreicht, daß die Steuerkammer über ein elektrisch ansteuerbares Stellglied, insbesondere ein Magnetventil, mit Druckluft beaufschlagbar ist und das Stellglied über eine elektrische Leitung mit der Steuereinheit einer ABS-Anlage verbunden ist, die in Abhängigkeit vom Fahrzustand des Fahrzeugs ein Steuersignal generiert, welches bevorzugt zu den Signalen anderer Bedienungseinheiten auf das Stellglied einwirkt. Das Stellglied kann insbesondere als ein Magnetventil, aber auch als ein elektrisch ansteuerbarer Stellmotor mit Ventileinheit ausgebildet sein. Da das Steuersignal bei einer ABS-Anlage mit einer eigenen Steuereinheit oder dann auch in einer nachgeschalteten weiteren Steuereinheit in elektrischer Form vorliegt, ist es am einfachsten, auch ein elektrisch ansteuerbares Stellglied für die Druckluftbeaufschlagung des Steuerkolbens des Schaltventils vorzusehen.

Bei Verwendung elektrisch steuerbarer Schaltventile sind bereits Magnetventile Bestandteil eines solchen Schaltventils, so daß diese normalerweise über die Bedienungseinheit steuerbaren Magnetventile auch dazu benutzt werden können, um ein in Abhängigkeit vom Fahrzustand des Fahrzeuges generiertes Steuersignal zu verarbeiten. Dieses Steuersignal wird bevorzugt zu den Signalen sonstiger Bedienungseinheiten zur Einwirkung gebracht, d. h. es führt auf jeden Fall die Stellung Fahrt herbei, unabhängig davon, welche Stellung an der Bedienungseinheit, z. B. bei Containerbetrieb, eingestellt war. Wenn dagegen ein manuell mechanisch betätigbares Schaltventil Bestandteil der Steueranlage ist, so wird dieses Schaltventil mit einem Steuerkolben mit Steuerkammer ausgestattet und es wird der Steuerkammer ein Magnetventil vorgeordnet. Der Steuerkolben muß so auf die Ventileinheit des Schaltventils einwirken, daß die Stellung Fahrt eingenommen wird.

Wesentlich für die vorliegende Erfindung ist es, daß eine in Abhängigkeit vom Fahrzustand des Fahrzeugs generiertes Signal einer ABS-Anlage zur Steuerung benutzt wird. Solche luftgefederten Fahrzeuge sind in aller Regel mit einer ABS-Anlage ausgestattet und verfügen damit auch über Radsensoren, die den Bewegungszustand des Rads überwachen, so daß hiervon sehr einfach ein Steuersignal abgeleitet werden kann. Ein solches Steuersignal ist auch sehr verläßlich, etwa im Gegensatz zu einem Steuersignal, welches von der Betätigung der Bremse des Fahrzeuges abgeleitet wird, also etwa der Bremsleitung oder von einem Bremslichtschalter. Zwar sollte zu Beginn einer Fahrt mit einem Fahrzeug, auch ohne daß dazu die Notwendigkeit besteht, die Bremse durch Betätigung überprüft werden, jedoch unterbleibt dieser Vorgang zuweilen, so daß dann, wenn eine in Abhängigkeit von der Betätigung der Bremse abgeleitetes Signal Verwendung findet, die Gefahr besteht, daß die Stellung Fahrt erst bei der ersten Bremsung des Fahrzeuges erreicht wird. Es ist daher verläßlicher, das Steuersignal von dem Bewegungszustand des Rades abzugreifen. Das Steuersignal kann so generiert werden, daß es während einer Fahrt nur einmal auftritt, also das Schließen der Zündung und den nachfolgenden Bewegungszustand des Rades erfordert. Es ist aber auch möglich, das Steuersignal wiederholt zu generieren und allein von dem Eintritt der Bewegung des Rades abhängig zu machen, so daß das Steuersignal auch nach jedem Ampelstart auftritt. Schließlich ist es möglich, im Fahrbetrieb noch genauer zu unterscheiden, beispielsweise eine Geschwindkeitsgrenze zu wählen, unterhalb derer das Steuersignal unterdrückt bzw. oberhalb derer das Steuersignal weitergeleitet wird. So kann die Steuerheit einer Einrichtung zum Unterdrücken des Steuersignals unterhalb einer für Wechselbeladung, Containerbetrieb o. dgl. vorgesehenen Rangiergeschwindigkeit, Gangwahl o. dgl. oder zur Weitergabe des Steuersignals nur oberhalb einer Geschwindigkeitsgrenze aufweisen. Dabei ist es z. B. möglich, die Geschwindigkeitsgrenze auf vielleicht 20 km/h festzusetzen oder einzustellen, so daß bei einem Rangierbetrieb unterhalb dieser Geschwindigkeitsgrenze auch mit einem z. B. abgesenkten Fahrgestell gefahren werden kann. Dies ist dann besonders sinnvoll, wenn ein auf Stützen abgestellter Wechselaufbau unterfahren werden soll, oder wenn es erforderlich sein sollte, unter einer Brücke oder in einer Gebäudeeinfahrt mit nicht ausreichender Höhe im abgesenkten Zustand des Fahrgestells einzufahren. Wird dann die Geschwindigkeitsgrenze überschritten gibt die Steuereinheit automatisch das Steuersignal weiter und es wird die Stellung Fahrt eingestellt. Die Generierung des Steuersignals in Abhängigkeit vom Fahrzustand des Fahrzeugs kann auch auf unterschiedliche Gangwahl abgestellt werden. So kann beispielsweise die Einrichtung so getroffen sein, daß im ersten Vorwärtsgang, im Rückwärtsgang und im Leerlauf das Steuersignal unterdrückt wird, während es erst beim Schalten in den zweiten Gang weitergeleitet wird. Auch dabei besteht die Möglichkeit, den Fahrzustand unterhalb der Geschwindigkeitsgrenze bzw. dem entsprechenden Gang durch eine Warnleuchte dem Fahrer anzuzeigen oder durch ein akustisches Signal verständlich zu machen. Der grundlegende Gedanke besteht in all diesen Fällen darin, irgendwie in Abhängigkeit vom Fahrzustand des Fahrzeugs ein Steuersignal zu generieren, mit dem automatisch die Stellung Fahrt am Schaltventil eingestellt wird.

Zur Ermöglichung eines Rangierbetriebes ist es auch möglich, in der pneumatischen Leitung zwischen dem Stellglied und dem Schaltventil ein Rangierventil anzuordnen. Dies kann als Drei/Zwei-Wegeventil ausgebildet sein und in der einen Stellung die Druckluft zu dem Steuerkolben des Schaltventils durchlassen und in der anderen Stellung die Endlüftung der Steuerkammer des Schaltventils herbeiführen. Die Betätigung dieses Rangierventiles sollte ebenfalls mit einer Warnlampe abgesichert werden, damit nicht vergessen wird, das Rangierventil nach Beendigung des Rangierbetriebes in seine normale, den Druckluftdurchgang herstellende Stellung zurückzuführen.

Es besteht auch die Möglichkeit, daß eine Bedienungseinheit zum Einsteuern des Hebe- oder Senkvorganges mit einer Einrichtung zum Einsteuern einer willkürlichen Unterdrückung des Steuersignals vorgesehen ist. So gibt es Bedienungseinheiten, die bisher zum willkürlichen Einsteuern des Hebe- oder Senkvorganges benutzt werden. Auch eine Rampensteuerung ist eine solche Bedienungseinheit. Diese Bedienungseinheit kann mit einem zusätzlichen Knopf oder Schalter ausgestattet werden, um die Unterdrückung oder Unterbrechung der Weitergabe des Steuersignals ansteuern zu können und damit willkürlich einen Rangierbetrieb des Fahrzeuges unterhalb einer Geschwindigkeitsgrenze auch mit abgesenktem Fahrgestell zu ermöglichen. Bei Überschreiten der Geschwindigkeitsgrenze kann die Unterdrückung automatisch aufgehoben werden. Auch ein elektrischer Schalter in der elektrischen Leitung zu dem Magnetventil kann diese Aufgabe erfüllen.

Das Stellglied kann einem auch manuell mechanisch betätigbaren Schaltventil zugeordnet sein, welches mit der Steuerkolben und der Steuerkammer ausgestattet ist. Der Steuerkolben wirkt auf die Ventileinheit des Schaltventils so ein, daß bei Beaufschlagung der Steuerkammer die Stellung Fahrt eingenommen wird. Die Verhältnisse müssen so ausgelegt sein, daß auch hier das Steuersignal für die Stellung Fahrt Vorrang hat.

Es ist insbesondere sinnvoll, daß den Fahrzustand des Fahrzeugs symbolisierende Steuersignal von einem Radsensor abzuleiten und der Steuereinheit der ABS-Anlage zuzuführen, die dieses Signal weiterverarbeitet und letztlich auf das Magnetventil schickt.

Bei Einsatz eines auch manuell betätigbaren Schaltventils kann als Steuersignal ein Impulssignal oder ein Dauersignal Verwendung finden. Bei einem Impulssignal, welches nur kurzzeitig wirkt, muß dafür Sorge getragen sein, daß die Ventileinheit des Schaltventils in der eingestellten Stellung Fahrt verbleibt, auch wenn das Impulssignal verschwindet. Es dürfen also beispielsweise keine Rückführfedern vorgesehen sein, die den Steuerkolben in Gegenrichtung belasten.

Bei Einsatz eines elektrisch betätigbaren Schaltventils sollte zweckmäßig als Steuersignal ein Dauersignal Verwendung finden, weil die Steuerkolben derartiger Schaltventile mit Rückführfedern ausgestattet sind. In Verbindung mit Schaltventilen ohne Rückführfedern kann auch ein Impulssignal Verwendung finden.

Zusätzlich zu dem den Fahrzustand symbolisierenden Steuersignal kann ein weiteres Steuersignal während der Selbstüberprüfungsphase der ABS-Anlage generiert werden. ABS-Anlagen sind oft so konzipiert, daß sie sich nach dem Schließen der Zündung des Fahrzeugs zunächst selbst überprüfen, und zwar, noch bevor das Fahrzeug in Bewegung gesetzt wird. Damit besteht die Möglichkeit, von dieser Selbstüberprüfungsphase ein weiteres Steuersignal abzuleiten und dieses Steuersignal ebenfalls zum Umschalten des Schaltventils in die Stellung Fahrt zu benutzen. Allein sollte dieses weitere Steuersignal jedoch nicht Verwendung finden, weil nicht auszuschließen ist, daß sich an den Schließvorgang der Zündung nicht unbedingt eine Fahrt, sondern beispielsweise auch ein Containerbetrieb anschließen kann, während dem die Stellung Fahrt wieder aufgehoben wird, so daß bei einer dann einsetzenden Fahrt des Fahrzeugs die Gefahr besteht, daß die zuletzt im Containerbetrieb gewählte Stellung des Schaltventils auch bei der Fahrt erhalten bleibt. Hier ist also das erste Steuersignal, welches in Abhängigkeit vom Fahrzustand des Fahrzeugs abgeleitet wird, unverzichtbar.

Das in Abhängigkeit vom Fahrzustand des Fahrzeugs generierte Steuersignal kann in zeitlichen Abständen wiederholt generiert werden, um eine Überprüfung sicherzustellen.

Die Erfindung wird anhand verschiedener Ausführungsbeispiele weiter erläutert und beschrieben. Es zeigen:
- Figur 1: eine erste Ausführungsform der Steueranlage mit einem manuell mechanisch betätigbaren Schaltventil,
- Figur 2: die gesamte Schaltung der Steueranlage mit dem Schaltventil gemäß Figur 1,
- Figur 3: die wesentlichen Teile einer Steueranlage mit einem elektrisch gesteuerten Schaltventil und
- Figur 4: eine weitere Steueranlage für ein Fahrzeug mit elektrischer Luftfederung.

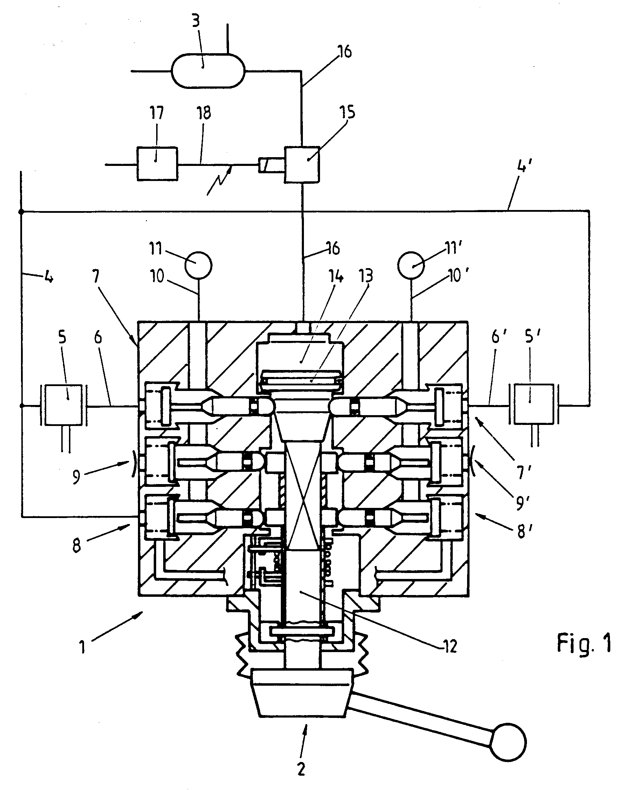

In Figur 1 ist ein manuell mechanisch betätigbares Schaltventil 1 im Querschnit dargestellt. Es besitzt eine Bedienungseinheit 2 aus einem Hebel und einer Schaltwelle und läßt sich somit durch Verdrehen und Verschieben willkürlich in die vier Stellungen Heben, Senken, Fahrt und Stop überführen. Das Schaltventil 1 ist für zwei Luftfederkreise ausgebildet. Druckluft aus einem Druckluftvorratsbehälter 3 steht über eine Leitung 4 einerseits an einem Niveauregelventil 5 und andererseits direkt am Schaltventil 1 an. Vom Niveauregelventil 5 führt eine Leitung 6 zu einem Sperrventil 7. Für die Stellungen Heben und Senken ist ein Einlaßventil 8 und ein Auslaßventil 9 vorgesehen. Über entsprechende Verbindungen und eine Leitung 10 ist ein Luftfederbalg 11 angeschlossen, der zu dem ersten Luftfederkreis gehört. Entsprechende Einzelteile gehören zu einem weiteren Luftfederkreis, der diesbezüglich mit einmal gestrichenen Bezugszeichen verdeutlicht ist.

Die Schaltwelle 12 der Bedienungseinheit 2 ist mit einem Steuerkolben 13 versehen, an den sich im Gehäuse des Schaltventils 1 eine Steuerkammer 14 anschließt. Dem Steuerkolben 13 bzw. der Steuerkammer 14 ist ein Magnetventil 15 vorgeordnet, welches als separates Magnetventil in einer Leitung 16 vom Druckluftvorratsbehälter 3 zum Schaltventil 1 vorgesehen sein kann. Eine andere Möglichkeit besteht darin, das Magnetventil 15 am Schaltventil 1 anzusetzen und mit diesem baulich zu vereinigen.

Von einer Steuereinheit 17 einer ABS-Anlage führt eine elektrische Leitung 18 zum Magnetventil 15. Die Steuereinheit 17 generiert ein Steuersignal in Abhängigkeit von dem Fahrzustand des Fahrzeugs und leitet dieses über die elektrische Leitung 18 auf das Magnetventil 15, welches daraufhin in die Offenstellung übergeht, so daß Druckluft aus dem Druckluftvorratsbehälter 3 in die Steuerkammer 14 gelangt und den Steuerkolben 13 belastet. Der Steuerkolben 13 wird demzufolge so verschoben oder belastet, daß auf jeden Fall die Stellung Fahrt des Schaltventils 1 eingestellt wird oder gesichert wird. Die Verarbeitung des Steuersignals der Steuereinheit 17 geschieht derart, daß dieses Signal Vorrang vor einer eventuellen gleichzeitigen Betätigung der Bedienungseinheit 2 hat.

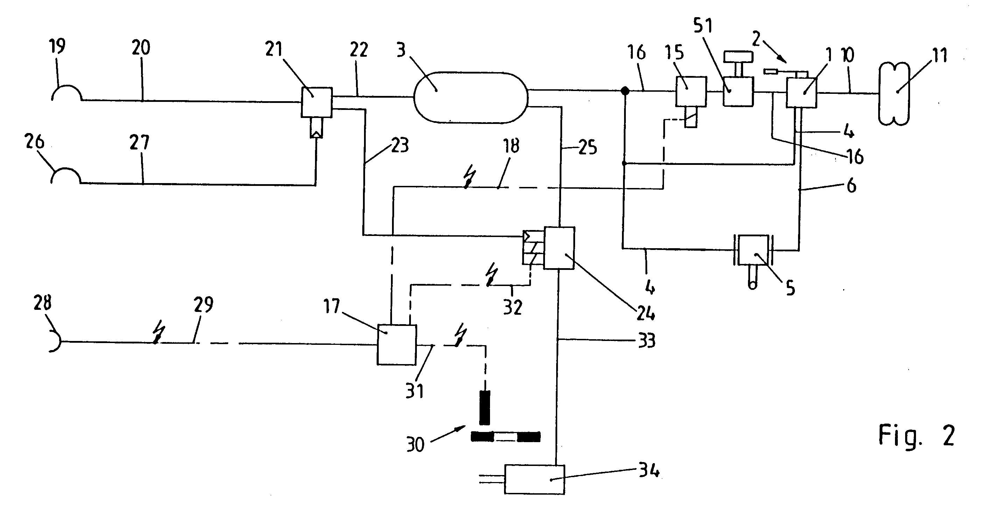

Figur 2 verdeutlicht die Gesamtanlage mit dem manuell mechanisch betätigbaren Schaltventil 1 gemäß Figur 1 am Beispiel einer Anlage für ein Anhängefahrzeug. Von einem Kupplungskopf Vorrat 19 führt eine Leitung 20 zu einem Anhängerbremsventil 21. Eine erste Leitung 22 verbindet das Anhängerbremsventil 21 mit dem Druckluftvorratsbehälter 3. Eine zweite Leitung 23 führt als Steuerleitung zu einem ABS-Relaisventil 24, welches ansonsten mit Druckluft aus dem Druckluftvorratsbehälter über eine Leitung 25 versorgt wird. Von einem Kupplungskopf Bremse 26 führt eine Bremsleitung 27 zum Anhängerbremsventil 21. Ein elektrischer Stecker 28 mit Leitung 29 dient der elektrischen Versorgung der Steuereinheit 17 auf dem Anhängefahrzeug. Es ist ein Radsensor 30 vorgesehen, der Bestandteil der Antiblockieranlage ist und von dem eine Leitung 31 zu der Steuereinheit 17 der Antiblockieranlage führt. Von dort geht die Leitung 18 zum Magnetventil 15 aus und über eine weitere Leitung 32 werden die Magnete des ABS-Relaisventils 24 geschaltet. Vom ABS-Relaisventil 24 führen entsprechende Leitungen 33 zu den Bremszylindern 34.

Sobald sich das Fahrzeug bewegt, also der Fahrzustand eintritt, entstehen entsprechende Signale am Radsensor 30.

Hieraus wird ein Steuersignal abgeleitet und von der Steuereinheit 17 über die elektrische Leitung 18 auf das Magnetventil 15 gegeben, so daß dies in die Offenstellung überführt wird, so daß Druckluft aus dem Druckluftvorratsbehälter 3 über die Leitung 16 zum Steuerkolben 13 des Schaltventils 1 strömt und dieses in die Stellung Fahrt umschaltet, falls es vorher manuell nicht in die Stellung Fahrt umgeschaltet war. Das Steuersignal kann als Dauersignal oder als Impulssignal Verwendung finden. Wenn es als Impulssignal eingesetzt wird, muß dafür Sorge getroffen sein, daß die Ventileinheiten des Schaltventils 1 in der Stellung Fahrt verbleiben, wenn die Stellung Fahrt eingestellt ist. Dies schließt selbstverständlich nicht aus, daß nach Beendigung der Fahrt über die Bedienungseinheit 2 ein Containerbetrieb aufgenommen werden kann, also unter Durchschreiten der Stellung Stop eine Stellung Heben oder Senken eingestellt wird. Nur während der Fahrt ist dies nicht möglich, so daß während der Fahrt verläßlich die Regelfunktion des Niveauregelventils 5 auf die Luftfederbälge 11 stattfindet.

Wie aus Figur 2 ersichtlich ist, kann in die Leitung 16 zwischen dem Magnetventil 15 und dem Schaltventil 1 auch ein Rangierventil 51 eingeschaltet sein, welches in der einen Stellung den Durchgang durch die Leitung 16 sicherstellt und in der anderen Stellung die Leitung 16 nach dem Magnetventil 15 entlüftet. Damit ist ein Rangierbetrieb möglich, so daß das Fahrzeug auch mit abgesenktem Fahrzeugaufbau gefahren werden kann. Es ist auch möglich, diese Funktion im Bereich der Steuereinheit 17 zu verwirklichen, also eine Geschwindigkeitsgrenze festzulegen, um nur oberhalb dieser das Steuersignal an das Magnetventil 15 weiterzugeben. Auch eine Abstimmung auf die entsprechenden Gänge eines Schaltgetriebes ist möglich.

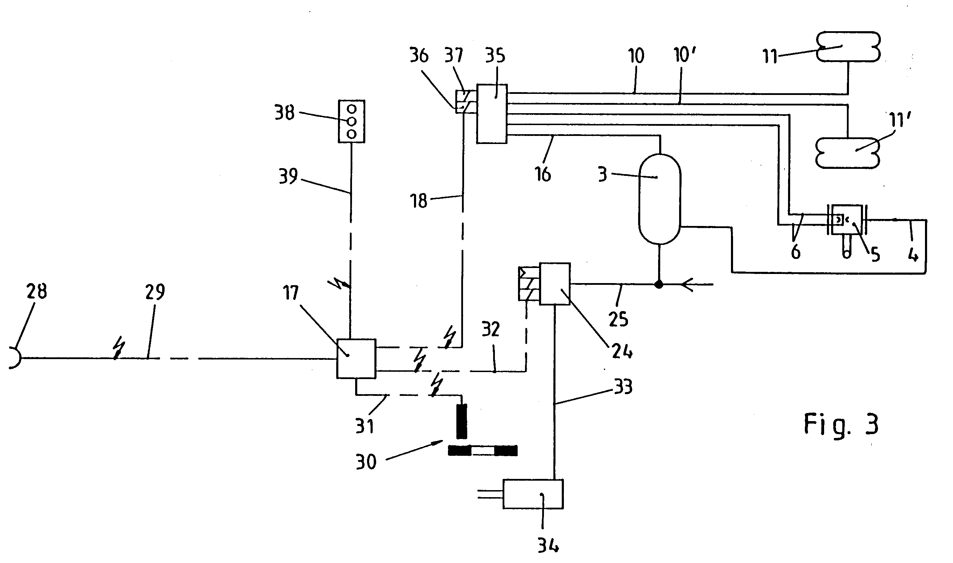

Figur 3 zeigt ein elektrisch gesteuertes Schaltventil 35, welches für die vier Stellungen Heben, Senken, Fahrt und Stop mindestens zwei Magnetventile 36, 37 aufweist. Ansonsten erfüllt das Schaltventil 35 die dem Schaltventil 1 vergleichbaren Funktionen. Die Bedienungseinheit 38 zum willkürlichen Heben und Senken des Fahrzeugaufbaus ist über eine Leitung 39 an die Steuereinheit 17 der ABS-Anlage angeschlossen. Die Leitung 18 dient hier nicht nur der Übermittlung des in Abhängigkeit vom Fahrzustand generierten Steuersignals, sondern auch der übrigen Steuersignale, die durch die Bedienungseinheit 38 ausgelöst werden. Es ist auch hier Sorge dafür getragen, daß das Steuersignal in Abhängigkeit vom Fahrzustand des Fahrzeugs Vorrang hat. Auch hier wird dieses Steuersignal von dem Radsensor 30 generiert und über die elektrische Leitung 31 der Steuereinheit 17 zugeführt. Ansonsten ist die Anlage gemäß Figur 2 vergleichbar.

Bei Verwendung eines elektrisch steuerbaren Schaltventils 35 sollte das den Fahrzustand symbolisierende Steuersignal zweckmäßig ein Dauersignal sein, es sei denn, die Ausgangsstellung des Schaltventils 35 entspricht der Stellung Fahrt, was aber andere Nachteile hat.

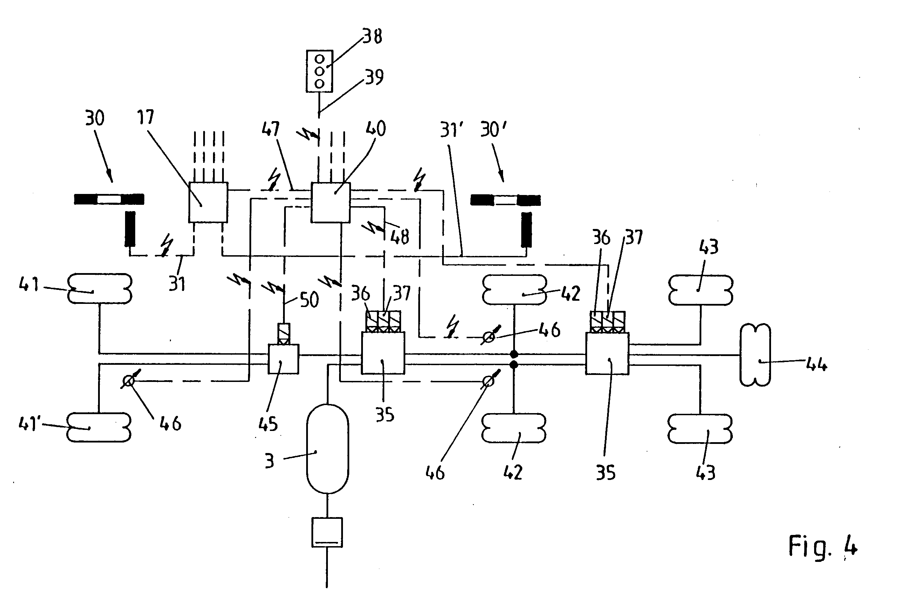

Figur 4 zeigt eine Anlage mit elektrischer Luftfederung für ein Zugfahrzeug. Zusätzlich zu der Steuereinheit 17 der ABS-Anlage mit dem Radsensor 30 ist eine Steuereinheit 40 für die elektrische Luftfederung vorgesehen, an die auch die Bedienungseinheit 38 zum willkürlichen Heben und Senken des Fahrzeugaufbaus angeschlossen ist. Luftfederbälge 41 sind der Vorderachse zugeordnet. Auf einer Antriebsachse sitzen Luftfederbälge 42 und eine Liftachse ist mit Luftfederbälgen 43 und einem Liftbalg 44 ausgestattet. Es sind hier zwei elektrisch gesteuerte Schaltventile 35 in der dargestellten Leitungsverbindung vorgesehen sowie ein zusätzliches Schaltventil 45, welches der Vorderachse zugeordnet ist.

Elektrische Weggeber 46 überwachen die Höhe des Fahrzeugaufbaus gegenüber dem Fahrgestell. Elektrische Leitungen 47 führen von der Steuereinheit 17 der ABS-Anlage zu der Steuereinheit 40 der Luftfederung. Leitungen 48, 49 und 50 führen jeweils von der Steuereinheit 40 zu den Schaltventilen 35 und 45.

Auch hier erfolgt die Signalverarbeitung in der Weise, daß von den Signalen des Radsensors 30 ein Steuersignal über die Steuereinheiten 17 und 40 während des Fahrzustands des Fahrzeugs abgeleitet wird und bevorzugt zu etwaigen Signalen der Bedienungseinheit 38 an die Schaltventile 35 und 45 weitergegeben wird, so daß dort die Stellung Fahrt eingestellt oder gesichert wird.

## Patentansprüche

1. Steueranlage zum willkürlichen Heben und Senken des Fahrzeugaufbaus von luftgefederten Fahrzeugen mit Niveauregelung, mit einer Druckluftquelle, mindestens einem Niveauregelventil (5), mindestens einer Fahrzeugachse zugeordneten Luftfederbälgen (11) und einem in die Leitungsverbindungen der Niveauregelventile (5) mit den Luftfederbälgen (11) oder mit der Druckluftquelle und dem drucklosen Auslaß eingebauten Schaltventil (1) mit den Stellungen Heben, Senken, Fahrt und Stop, wobei das Schaltventil (1) einen Steuerkolben (13) aufweist, dessen Steuerkammer (14) zum Erreichen der Stellung Fahrt mit Druckluft beaufschlagbar ist, dadurch gekennzeichnet, daß die Steuerkammer über ein elektrisch ansteuerbares Stellglied, insbesondere ein Magnetventil (15; 36, 37) mit Druckluft beaufschlagbar ist und das Stellglied über eine elektrische Leitung (18; 48, 49) mit der Steuereinheit (17) einer ABS-Anlage verbunden ist, die in Abhängigkeit vom Fahrzustand des Fahrzeugs ein Steuersignal generiert, welches bevorzugt zu den Signalen sonstiger Bedienungseinheiten (2, 38) auf das Stellglied einwirkt.

2. Steueranlage nach Anspruch 1, dadurch gekennzeichnet, daß die Steuereinheit (17 oder 40) eine Einrichtung zum Unterdrücken des Steuersignals unterhalb einer für Wechselbeladung, Containerbetrieb od. dgl. vorgesehenen Rangiergeschwindigkeit, Gangwahl od. dgl. oder zur Weitergabe des Steuersignals nur oberhalb einer Geschwindigkeitgrenze aufweist.

3. Steueranlage nach Anspruch 1, dadurch gekennzeichnet, daß in der pneumatischen Leitung zwischen dem Stellglied und dem Schaltventil (1, 35, 45) ein Rangierventil (51) angeordnet ist.

4. Steueranlage nach Anspruch 1, dadurch gekennzeichnet, daß eine Bedienungseinheit (38) zum Einsteuern des Hebe- oder Senkvorgangs mit einer Einrichtung zum Einsteuern einer willkürlichen Unterdrückung des Steuersignals vorgesehen ist.

5. Steueranlage nach Anspruch 1, dadurch gekennzeichnet, daß das Stellglied einem auch manuell betätigbaren Schaltventil (1) zugeordnet ist, welches mit dem Steuerkolben (13) und der Steuerkammer (14) ausgestattet ist.

6. Steueranlage nach Anspruch 1, dadurch gekennzeichnet, daß das den Fahrzustand des Fahrzeugs symbolisierende Steuersignal von einem Radsensor (30) abgeleitet und der Steuereinheit (17) der ABS-Anlage zugeführt wird.

7. Steueranlage nach Anspruch 5 oder 6, dadurch gekennzeichnet, daß bei Einsatz eines auch manuell mechanisch betätigbaren Steuerventils (1) als Steuersignal ein Impulssignal oder ein Dauersignal Verwendung findet.

8. Steueranlage nach Anspruch 1, dadurch gekennzeichnet, daß bei Einsatz eines elektrisch betätigbaren Schaltventils (35, 45) als Steuersignal ein Impulssignal oder ein Dauersignal Verwendung findet.

9. Steueranlage nach Anspruch 1, dadurch gekennzeichnet, daß zusätzlich zu dem den Fahrzeugzustand symbolisierenden Steuersignal ein weiteres Steuersignal während der Selbstüberprüfungsphase der ABS-Anlage generiert wird.

10. Steueranlage nach Anspruch 1, dadurch gekennzeichnet, daß das in Abhängigkeit vom Fahrzustand des Fahrzeugs generierte Steuersignal in zeitlichen Abständen wiederholt generiert wird.

## Claims

1. Control system for the random raising and lowering of the vehicle body of air-suspended vehicles with level control, with a compressed air source, at least one leveling valve (5), with air suspension bellows (11) assigned to at least one vehicle axle and with a switching valve (1) with the designated positions Raise, Lower, Drive and Stop which bellows can be connected to the compressed air source via the leveling valve (5) or to an exhaust, wherein the switching valve (1) comprises a control piston (13), the control chamber (14) of which may be pressurized by air under pressure to reach the position Drive, **whereby** the control chamber may be pressurized by air under pressure via an electrically operated control element, especially a solenoid valve (15; 36, 37), and the control element is connected to a process controler arrangement (17) via an electric line (18; 48, 49), which generates a control signal depending on the driving position of the vehicle, which acts upon the control element in priority to the signals of other operating elements (2, 38).

2. The control system of claim 1, **whereby** the process controler arrangement (17 or 40) comprises a device for the suppression of the control signal below a shunting speed, a certain gear or the like provided for charging and decharging, lifting or lowering of containers or the like or for the conduction of the control signal only above a speed limit.

3. The control system of claim 1, **whereby** a shunting brake valve (51) is located in the pneumatic line between the control element and the switching valve (1).

4. The control system of claim 1, **whereby** an operating element (38) for the controlling of the raising or lowering is provided with respect to a device for the random suppression of the control signal.

5. The control system of claim 1, **whereby** the control element is allocated to a switching valve (1), which may be manually operated also and which is equipped with the control piston (13) and the control chamber (14).

6. The control system of claim 1, **whereby** the control signal symbolizing the driving condition of the vehicle is derived from a sensor (30) in the area of the wheel and conducted to the process controler arrangement (17) of the ABS-device.

7. The control system of claim 5 or 6, **whereby** a signal of impulse or a permanent signal is used as a control signal in connection with a switching valve (1), which may be manually operated also.

8. The control system of claim 1, **whereby** a signal of impulse or a permanent signal is used as a control signal in connection with an electrically operated switching valve (35, 45).

9. The control system of claim 1, **whereby** an additional control signal symbolizing the driving condition of the vehicle is generated during the self-checking phase of the ABS-device.

10. The control system of claim 1, **whereby** the control signal depending on the driving position of the vehicle is repeatedly generated from time to time.

## Revendications

1. Système de commande pour relever et abaisser volontairement la carrosserie de véhicules à suspension pneumatique et réglage du niveau, comportant une source d'air comprimé, au moins une soupape de réglage de niveau (5), des soufflets de suspension pneumatique (11) associés à au moins un essieu du véhicule et une soupape de commutation (1) montée dans les conduites de liaison des soupapes de réglages de niveau (5) avec les soufflets de suspension pneumatique (11) ou avec la source d'air comprimé et l'évacuation sans pression, avec les positions levage, abaissement, marche et stop, la soupape de commutation (1) comportant un piston de commande (13) dont la chambre de commande (14) peut être alimentée en air comprimé pour obtenir la position marche, caractérisé en ce que la chambre de commande peut être alimentée en air comprimé par un organe de réglage à commande électrique, en particulier une soupape électromagnétique (15 ; 36, 37) et l'organe de réglage est relié, par une ligne électrique (18 ; 48, 49), à l'unité de commande (17) d'un système ABS, qui génère un signal de commande en fonction de l'état de marche du véhicule, lequel signal agit de préférence aux signaux d'autres unités de service (2, 38), sur l'organe de réglage.

2. Système de commande selon la revendication 1, caractérisé en ce que l'unité de commande (17 ou 40) comporte un dispositif de suppression du signal de commande au-dessous d'une vitesse de manoeuvre prévue pour le changement de chargement, le chargement et déchargement de conteneurs ou similaires, d'une sélection de rapports ou similaire ou de transmission du signal de commande uniquement au-dessous d'une vitesse limite.

3. Système de commande selon la revendication 1, caractérisé en ce que dans la conduite pneumatique entre l'organe de réglage et la soupape de commutation (1, 35, 45) il est prévu une soupape de manoeuvre (51).

4. Système de commande selon la revendication 1, caractérisé en ce qu'il est prévu une unité de service (38) pour commander l'opération de levage ou d'abaissement avec un dispositif destiné à commander une suppression volontaire du signal de commande.

5. Système de commande selon la revendication 1, caractérisé en ce que l'organe de réglage est associé à une soupape de commutation (1) actionnée manuellement, qui est équipée du piston de commande (13) et de la chambre de commande (14).

6. Système de commande selon la revendication 1, caractérisé en ce que le signal de commande symbolisant l'état de marche du véhicule est dérivé d'un capteur de roue (30) et envoyé à l'unité de commande (17) du système ABS.

7. Système de commande selon la revendication 5 ou 6, caractérisé en ce que dans le cas où l'on utilise une soupape de commutation (1) actionée également mécaniquement, manuellement, on utilise comme signal de commande un signal par impulsions ou un signal permanent.

8. Système de commande selon la revendication 1, caractérisé en ce que dans le cas où l'on utilise une soupape de commutation (35, 45) actionée électriquement, on utilise comme signal de commande un signal par impulsions ou un signal permanent.

9. Système de commande selon la revendication 1, caractérisé en ce qu'en plus du signal de commande symbolisant l'état de marche, il est généré un autre signal de commande pendant la phase d'auto-test du système ABS.

10. Système de commande selon la revendication 1, caractérisé en ce que le signal de commande généré en fonction de l'état de marche du véhicule est renouvelé à intervalles de temps.
